(19) Europäisches Patentamt
European Patent Office
Office européen des brevets

(11) **EP 4 102 685 A1**

(12) **EUROPEAN PATENT APPLICATION**
published in accordance with Art. 153(4) EPC

(43) Date of publication:
**14.12.2022 Bulletin 2022/50**

(21) Application number: **20917422.6**

(22) Date of filing: **07.02.2020**

(51) International Patent Classification (IPC):
**H02K 1/27** (2022.01)

(52) Cooperative Patent Classification (CPC):
**H02K 1/27**

(86) International application number:
**PCT/JP2020/004741**

(87) International publication number:
**WO 2021/157047 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **BABA, Kazuhiko
Tokyo 100-8310 (JP)**

(74) Representative: **Pfenning, Meinig & Partner mbB
Patent- und Rechtsanwälte
Theresienhöhe 11a
80339 München (DE)**

(54) **ROTOR, ELECTRIC MOTOR, COMPRESSOR, REFRIGERATION CYCLE DEVICE, AND AIR CONDITIONING DEVICE**

(57) A rotor (4) is a rotor in a motor (6) for driving a compression mechanism part (21) that compresses a refrigerant (20). The rotor (4) has a permanent magnet (45) including a plurality of crystal grains (45a), and an average crystal grain diameter of the plurality of crystal grains (45a) is 1.6 μm to 12 μm. The motor (6) includes the rotor (4) and a stator (5). A compressor (10) includes the motor (6), the compression mechanism part (21), and a container (30) that accommodates the motor (6) and the compression mechanism part (21). A refrigeration cycle apparatus (100) includes the compressor (10), a condenser (101) that condenses the refrigerant (20) sent out from the compressor (10), an expansion device (102) that expands the refrigerant condensed by the condenser (101), and an evaporator (103) that evaporates the refrigerant (20) flowing out of the expansion device (102).

FIG. 6

START

FORM INGOT — ST1

PULVERIZATION — ST2

MOLDING — ST3

HEAT TREATMENT — ST4

ADDITIONAL PROCESSING — ST5

END

## Description

## TECHNICAL FIELD

The present disclosure relates to a rotor, a motor, a compressor, a refrigeration cycle apparatus and an air conditioner.

## BACKGROUND ART

There has been widespread a compressor including a compression mechanism part that compresses a refrigerant and a motor that drives the compression mechanism part (see Patent Reference 1, for example). In Patent Reference 1, a rotor of the motor includes a rotor core and a permanent magnet inserted in a magnet insertion hole of the rotor core.

## PRIOR ART REFERENCE

## PATENT REFERENCE

Patent Reference 1: Japanese Patent No. 5661903 (see paragraph 0023 and FIG. 24, for example)

## SUMMARY OF THE INVENTION

## PROBLEM TO BE SOLVED BY THE INVENTION

However, there are cases where irreversible demagnetization occurs in the permanent magnet in the magnet insertion hole of the rotor since the motor of the compressor is located in an atmosphere of the refrigerant at a high temperature.
An object of the present disclosure is to prevent the occurrence of the irreversible demagnetization of the permanent magnet of the rotor.

## MEANS FOR SOLVING THE PROBLEM

A rotor according to an aspect of the present disclosure is a rotor in a motor for driving a compression mechanism part that compresses a refrigerant. The rotor has a permanent magnet including a plurality of crystal grains, and an average crystal grain diameter of the plurality of crystal grains is 1.6 $\mu$m to 12 $\mu$m.
A rotor according to another aspect of the present disclosure is a rotor in a motor for driving a compression mechanism part that compresses a refrigerant. The rotor has a permanent magnet including a plurality of crystal grains, and an average crystal grain diameter of the plurality of crystal grains is 2.0 $\mu$m to 9.9 $\mu$m.

## EFFECT OF THE INVENTION

According to the present disclosure, the occurrence of the irreversible demagnetization of the permanent magnet of the rotor can be prevented.

## BRIEF DESCRIPTION OF THE DRAWINGS

FIG. 1 is a diagram showing a configuration of a refrigeration cycle apparatus according to a first embodiment.
FIG. 2 is a cross-sectional view showing a configuration of a compressor according to the first embodiment.
FIG. 3 is a cross-sectional view showing a configuration of a motor according to the first embodiment.
FIG. 4 is a schematic diagram showing a polycrystalline structure of a permanent magnet of a rotor of the motor according to the first embodiment.
FIG. 5 is a graph showing a relationship between an average crystal grain diameter of crystal grains and a coercive force of the permanent magnet of the rotor according to the first embodiment.
FIG. 6 is a flowchart showing a manufacturing process of the permanent magnet of the rotor according to the first embodiment.
FIG. 7 is a graph showing a relationship between a dysprosium content percentage and a residual flux density of the permanent magnet and a relationship between the dysprosium content percentage and the coercive force of the permanent magnet.
FIG. 8 is a diagram showing a demagnetization curve of the permanent magnet of the rotor according to the first embodiment and a demagnetization curve of a permanent magnet according to a comparative example.
FIG. 9 is a diagram showing a configuration of a motor drive device that drives the motor according to the first embodiment.
FIG. 10 is a diagram showing a configuration of an air conditioner according to the first embodiment.
FIG. 11 is a graph showing a relationship between the average crystal grain diameter of the crystal grains and the coercive force of the permanent magnet of a rotor according to a second embodiment.

## MODE FOR CARRYING OUT THE INVENTION

A rotor, a motor, a compressor, a refrigeration cycle apparatus and an air conditioner according to each embodiment will be described below with reference to the drawings. The following embodiments are just examples and it is possible to appropriately combine embodiments and appropriately modify each embodiment.
In this patent specification, types of the "refrigerant" are described by using refrigerant numbers starting with "R" stipulated in the international standard ISO 817.

**First Embodiment**

**(Refrigeration Cycle Apparatus)**

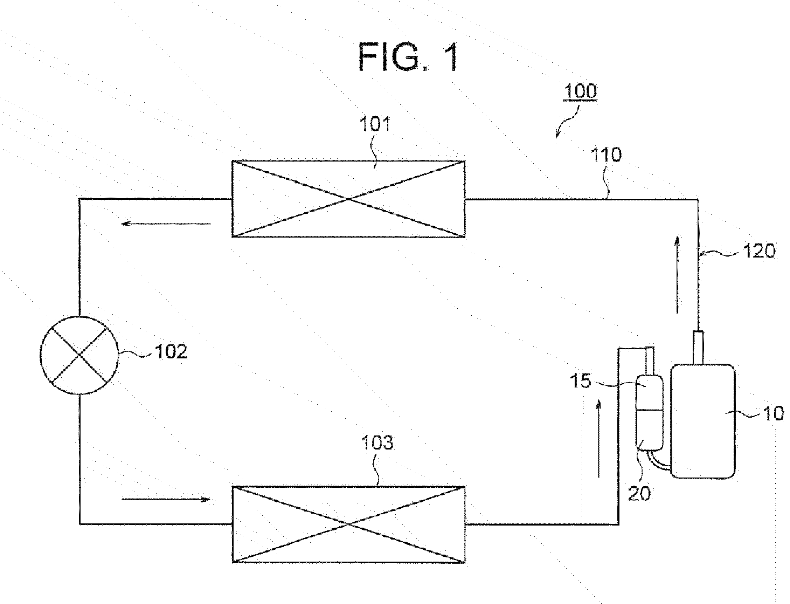

FIG. 1 is a diagram showing a configuration of a refrigeration cycle apparatus 100 according to a first embodiment. As shown in FIG. 1, the refrigeration cycle apparatus 100 includes a compressor 10, an accumulator 15, a condenser 101, an expansion valve 102 as a decompressor, and an evaporator 103. A refrigerant circuit 120 is formed by connecting the compressor 10, the accumulator 15, the condenser 101, the expansion valve 102 and the evaporator 103 together by using a pipe 110. In the refrigerant circuit 120, a refrigerant 20 stored in the accumulator 15 circulates.

Next, an operation of the refrigeration cycle apparatus 100 will be described. The compressor 10 compresses the refrigerant 20 taken in from the accumulator 15 and sends out the compressed refrigerant 20 as a high-temperature and high-pressure refrigerant gas. The condenser 101 performs heat exchange between the refrigerant gas sent out from the compressor 10 and a medium (for example, air), thereby condenses the refrigerant gas, and sends out the condensed refrigerant as a liquid refrigerant. The expansion valve 102 expands the liquid refrigerant sent out from the condenser 101 and sends out the expanded liquid refrigerant as a low-temperature and low-pressure liquid refrigerant. The evaporator 103 performs heat exchange between the low-temperature and low-pressure liquid refrigerant sent out from the expansion valve 102 and a medium (for example, air), thereby evaporates the liquid refrigerant, and sends out the evaporated refrigerant as a refrigerant gas. The refrigerant gas sent out from the evaporator 103 returns to the compressor 10 via the accumulator 15 and is compressed again. As above, the refrigerant 20 circulates in the refrigerant circuit 120 along the path indicated by arrows in FIG. 1. Namely, in the refrigerant circuit 120, the refrigerant 20 circulates in the order of the compressor 10, the condenser 101, the expansion valve 102 and the evaporator 103.

The refrigerant 20 is formed of a hydrocarbon, for example. In the first embodiment, the refrigerant 20 is R290 (i.e., propane). By use of R290 as the refrigerant 20, a maximum value of the temperature of the refrigerant 20 discharged from the compressor 10 (hereinafter referred to also as a "discharge temperature") can be reduced as compared to other refrigerants (for example, R32). In the first embodiment, the maximum value of the discharge temperature of the refrigerant 20 is lower than or equal to 100 °C. Specifically, the maximum value of the discharge temperature of the refrigerant 20 is 95 °C.

Further, the relative dielectric constant of R290 is 1.6 to 1.9 and is smaller than the relative dielectric constants of other refrigerants (for example, the relative dielectric constant of R32 is 13). Thus, by use of R290 as the refrigerant 20, the relative dielectric constant inside the compressor 10 decreases and leakage current is inhibited. Furthermore, the global warming potential of R290 is lower than the global warming potential of R32.

**(Configuration of Compressor)**

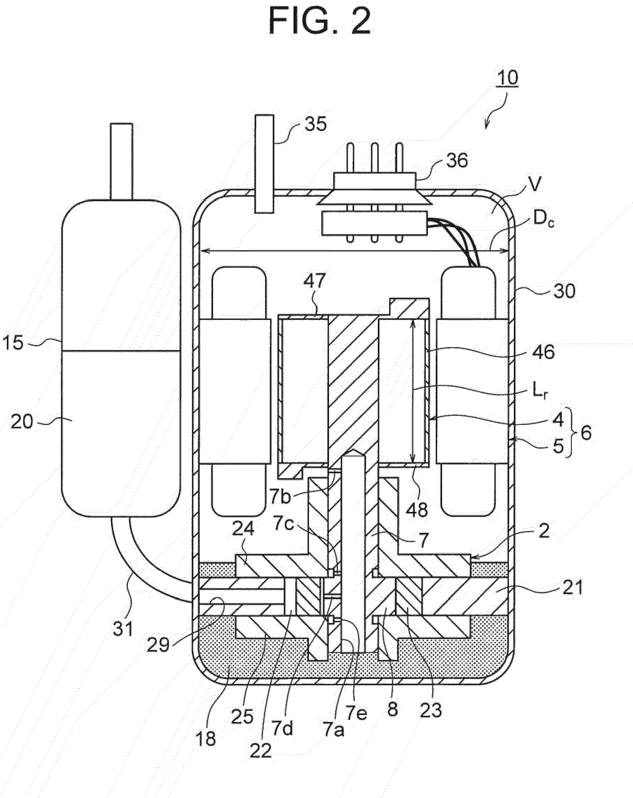

Next, the configuration of the compressor 10 according to the first embodiment will be described. FIG. 2 is a cross-sectional view showing a configuration of the compressor 10 according to the first embodiment. The compressor 10 is a rotary compressor, for example. The compressor 10 includes a compression mechanism part 2 that compresses the refrigerant 20 and a motor 6 that drives the compression mechanism part 2. The compression mechanism part 2 and the motor 6 are linked with each other by a rotary shaft 7. Incidentally, in the following description, a direction parallel to the rotary shaft 7 will be referred to as an "axial direction", a direction orthogonal to the axial direction will be referred to as a "radial direction" or a "width direction", and a direction along a circumference of a circle centering at the rotary shaft 7 will be referred to as a "circumferential direction".

The compression mechanism part 2 includes a cylinder 21, a rotary piston 23, an upper frame 24 and a lower frame 25. The cylinder 21 includes a cylinder chamber 22 in a cylindrical shape centering at the rotary shaft 7. An eccentric shaft part 8 of the rotary shaft 7 is situated in the cylinder chamber 22. The rotary piston 23 is linked with the eccentric shaft part 8.

The cylinder 21 further includes an intake port 29 that is connected to the accumulator 15 via an intake pipe 31. The intake port 29 is a channel through which the refrigerant 20 supplied from the accumulator 15 flows.

The upper frame 24 closes an upper-side end of the cylinder chamber 22. The lower frame 25 closes a lower-side end of the cylinder chamber 22. Namely, the cylinder chamber 22 is a space between the upper frame 24 and the lower frame 25.

The compression mechanism part 2 and the motor 6 are accommodated in a hermetic container 30 as a container. The hermetic container 30 is in a cylindrical shape, for example.

The compressor 10 further includes the refrigerant 20 flowing in the hermetic container 30 and a refrigeration machine oil 18 stored in the hermetic container 30. The refrigeration machine oil 18 is stored in a lower part of the hermetic container 30. The refrigeration machine oil 18 is a lubricating oil that lubricates between the compression mechanism part 2 and the rotary shaft 7. In the first embodiment, the refrigeration machine oil 18 is synthetic oil. The refrigeration machine oil 18 is polyalkylene glycol oil (hereinafter referred to also as "PAG oil"), for example.

The density of the PAG oil is 0.96 g/cm$^3$ to 1.02 g/cm$^3$. Here, the density of R290 as the aforementioned example of the refrigerant 20 is 0.37 g/cm$^3$ to 0.59 g/cm$^3$. Namely, in the first embodiment, the density of the refrigeration machine oil 18 is higher than the density of the refrigerant 20. Therefore, in the first embodiment, an oil-rich layer of the refrigeration machine oil 18 is arranged in the lower part of the hermetic container 30 and a refrigerant-rich layer of the refrigerant 20 is arranged in an upper part of the hermetic container 30. Incidentally, the refrigeration machine oil 18 is not limited to PAG oil but can also be other synthetic oil such as polyol ester oil, polyvinyl ether oil or alkyl benzene oil. Further, as the refrigeration machine oil 18, it is desirable to select oil being capable of sufficiently lubricating the compressor 10 even when the refrigerant 20 is dissolved therein and having viscosity not reducing the efficiency of the compressor 10. For example, kinematic viscosity of base oil at 40 °C is desired to be approximately 5 cSt to 300 cSt. Furthermore, the refrigeration machine oil 18 may contain a flame retardant. With the flame retardant, combustion reaction of the refrigeration machine oil 18 can be inhibited effectively. As the flame retardant, a halogen-based flame retardant, a phosphorus-based flame retardant or a combination of these flame retardants is desirable, for example.

Part of the refrigerant 20 has dissolved in the refrigeration machine oil 18 stored in the lower part of the hermetic container 30. Here, the PAG oil used as the refrigeration machine oil 18 is a copolymer of propylene oxide and ethylene oxide. By adjusting the copolymerization ratio of propylene oxide and ethylene oxide, compatibility of R290 in PAG oil is adjusted and R290 and PAG oil are separated into two layers. Consequently, dilution by R290 dissolved in PAG oil is prevented, and thus the compression mechanism part 2 can be lubricated by PAG oil having sufficiently high viscosity. Further, solubility of R290 in PAG oil can be reduced since the density of PAG oil is higher than the density of R290.

The refrigeration machine oil 18 is supplied to the compression mechanism part 2 through the inside of the rotary shaft 7. Inside the rotary shaft 7, a first oil supply channel 7a is formed to extend in the axial direction and a plurality of second oil supply channels 7b, 7c, 7d and 7e branch in radial directions from the first oil supply channel 7a. The first oil supply channel 7a extends from a lower end of the rotary shaft 7 towards the body of the motor 6 (i.e., upward in FIG. 2). The refrigeration machine oil 18 is supplied from the second oil supply channels 7b, 7c, 7d and 7e to portions where the compression mechanism part 2 and the rotary shaft 7 slide on each other.

The motor 6 is a brushless DC motor, for example. The motor 6 is arranged on a downstream side of the compression mechanism part 2 in the direction of the flow of the refrigerant 20. Incidentally, the configuration of the motor 6 will be described later.

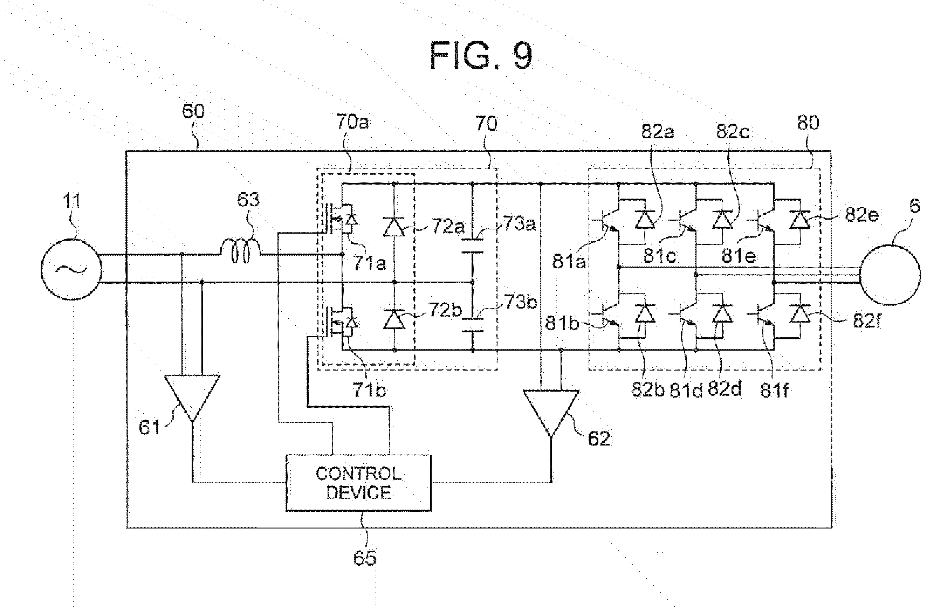

The compressor 10 further includes a discharge pipe 35 and a terminal 36 attached to the top of the hermetic container 30. The discharge pipe 35 allows the refrigerant 20 compressed by the compression mechanism part 2 to be discharged to the outside of the hermetic container 30. Drive current is supplied to the motor 6 from a drive circuit (motor drive device 60 in FIG. 9) which will be described later via the terminal 36.

**(Operation of Compressor)**

Next, an operation of the compressor 10 will be described. The drive current is supplied from the terminal 36 to the motor 6, by which a rotor 4 of the motor 6 is rotated. According to the rotation of the rotor 4, the rotary shaft 7 rotates and the rotary piston 23 linked to the eccentric shaft part 8 of the rotary shaft 7 also rotates.

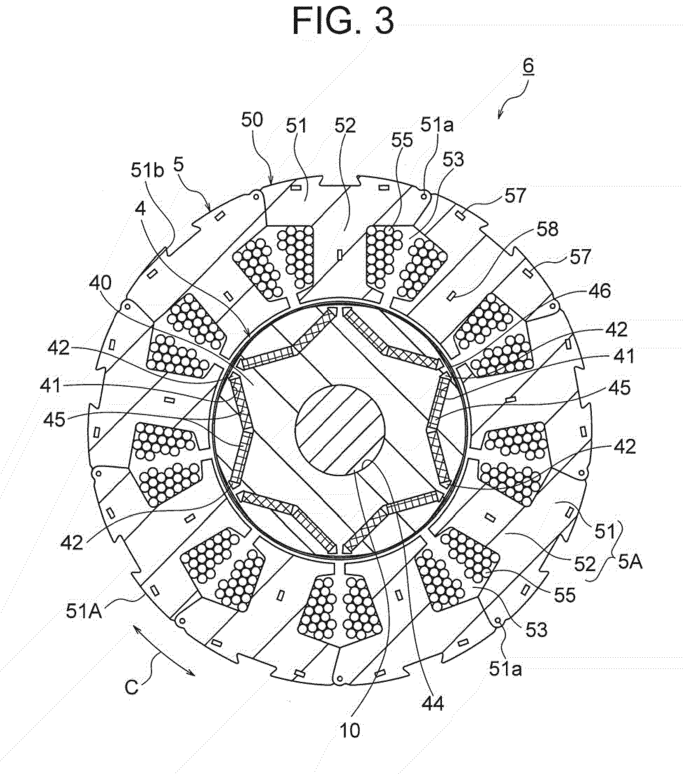

A low-temperature and low-pressure refrigerant gas stored in the accumulator 15 is taken into the cylinder chamber 22 through the intake pipe 31 and the intake port 29. The low-temperature and low-pressure refrigerant gas taken in is compressed by rotation of the rotary piston 23. The low-temperature and low-pressure refrigerant gas being compressed turns into a high-temperature and high-pressure refrigerant gas and ascends towards the motor 6 side. Accordingly, the periphery of the motor 6 is covered with the high-temperature and high-pressure gas refrigerant. Thereafter, the high-temperature and high-pressure refrigerant gas passes through spaces in the motor 6 (for example, a gap between a stator 5 which will be described later and the rotor 4, concave portions 51b of the stator 5 shown in FIG. 3, through holes in the rotor 4, and the like), is thereafter discharged from the discharge pipe 35, and flows into the condenser 101 shown in FIG. 1.

When the high-temperature and high-pressure refrigerant gas is discharged from the discharge pipe 35, a small amount of the refrigeration machine oil 18 is also discharged from the discharge pipe 35. In the case where the compressor 10 is a rotary compressor, the amount of the refrigeration machine oil 18 discharged from the discharge pipe 35 is less than or equal to 2.0 % of the amount of the refrigeration machine oil 18 stored in the hermetic container 30, for example. Here, in the case where the refrigeration machine oil 18 is PAG oil, the liquid refrigerant can dissolve in the PAG oil up to 2.0 % or higher. Thus, the PAG oil discharged from the discharge pipe 35 is condensed in the condenser 101 without separating from the liquid refrigerant and is sent out to the expansion valve 102.

In the expansion valve 102 shown in FIG. 1, the liquid refrigerant is decompressed as described above, is turns into a gas-liquid two-phase state, and moves to the evaporator 103 together with a small amount of PAG oil. In the evaporator 103, the PAG oil is in the state of dissolving in the liquid phase. The liquid refrigerant is evaporated in the evaporator 103. With the evaporation of the liquid refrigerant, the PAG oil gradually separates out. When the liquid refrigerant is gasified, the refrigerant and the PAG oil are in the separated state. Incidentally, the viscosity of oil tends to increase when the amount of the refrigerant dissolved in the oil in a low-pressure space is small. In the first embodiment, the viscosity grade of the base oil forming the PAG oil is set low (viscosity grade: approximately ISO VG 32 - 68, for example), and thus the PAG oil can move together with the refrigerant 20 without increasing the viscosity and return to the compressor 10.

Incidentally, the compressor 10 is not limited to a rotary compressor as an example of a high-pressure shell-type compressor but may also be a low-pressure compressor or a scroll compressor.

**(Configuration of Motor)**

FIG. 3 is a cross-sectional view showing a configuration of the motor 6 according to the first embodiment. The motor 6 includes the stator 5 and the rotor 4 rotatably arranged inside the stator 5. Namely, the motor 6 is a motor of the so-called inner rotor type. Between the stator 5 and the rotor 4, a gap of 0.3 mm to 1.0 mm, for example, is formed.

**(Configuration of Stator)**

The stator 5 includes a stator core 50 and a coil 55 wound on the stator core 50. The stator core 50 is installed in the hermetic container 30 of the compressor 10 shown in FIG. 2 by means of shrink fitting, press fitting, welding or the like.

The stator core 50 is formed by, for example, connecting a plurality of split cores 5A in the circumferential direction. Each split core 5A includes a yoke part 51 and a tooth part 52 extending inward in the radial direction from the yoke part 51. The yoke part 51 has a connection portion 51a in its outer end portion in the circumferential direction. The plurality of split cores 5A adjoining in the circumferential direction are connected together via the connection portions 51a. Incidentally, the stator 5 is not limited to the configuration in which a plurality of split cores 5A are connected together. The stator 5 may also be formed of a single ring-shaped core.

A ring-shaped yoke body is formed by connecting a plurality of yoke parts 51 together. A plurality of tooth parts 52 are arranged in the circumferential direction at constant intervals. In FIG. 3, the number of tooth parts 52 is nine. Incidentally, the number of tooth parts 52 is not limited to nine. It is sufficient that the number of tooth parts 52 is two or more.

Between tooth parts 52 adjoining each other in the circumferential direction, a slot 53 as a space accommodating the coil 55 is formed. The coil 55 is insulated by a covering material in order to maintain electrical insulation. As the covering material, it is possible to use polyester (PE) on the inner side of the coil 55 and use polyamide (PA) on the outer side of the coil 55, for example. It is also possible to use modified polyester or polyesterimide (PEI) on the inner side of the coil 55 and use modified polyamide or polyamideimide (PAI) on the outer side of the coil 55. Further, it is also possible to use PAI on the inner side and the outer side of the coil 55. By use of such insulating materials, the electrical insulation of the coil 55 can be maintained even when acid is generated due to hydrolysis of the refrigeration machine oil 18 shown in FIG. 1.

The yoke part 51 further includes the concave portion 51b on its outer circumferential surface. The concave portion 51b is concave inward from outside in the radial direction. The split core 5A is formed of a plurality of electromagnetic steel sheets stacked in the axial direction. The plurality of electromagnetic steel sheets are fixed together by a plurality of crimping portions 57 in each yoke part 51 and a crimping portion 58 in each tooth part 52. The plate thickness of each electromagnetic steel sheet is 0.1 mm to 0.5 mm, for example. In the first embodiment, the plate thickness of each electromagnetic steel sheet of the split core 5A is 0.25 mm. Incidentally, it is desirable to use an electromagnetic steel sheet having a thin plate thickness since the iron loss is likely to be higher in the stator 5 than in the rotor 4. Therefore, the plate thickness of each electromagnetic steel sheet of the split core 5A is desired to be thinner than the plate thickness of each electromagnetic steel sheet of a rotor core 40 which will be described later. With this configuration, the iron loss of the stator 5 is unlikely to be high and thus the temperature rise in the stator 5 can be inhibited.

Between the stator core 50 and the coil 55, an insulation part (not shown) made of resin may be arranged. The insulation part is formed by attaching a resin molded body to the stator core 50 or by integral molding together with the stator core 50. The insulation part is formed of, for example, a resin such as polyphenylene sulfide (PPS), polyamide (PA), polybutylene terephthalate (PBT), liquid crystal polymer (LCP), polyethylene terephthalate (PET) or the like. Incidentally, the insulation part may contain 10 % to 60 % of glass fiber to increase the strength. Further, in the insulation part, an oligomer with the oligomer content percentage of 1.5 wt.% or less is used as resin. With this configuration, liquation of the oligomer into the refrigerant 20 or the refrigeration machine oil 18 circulating in the refrigerant circuit 120 is inhibited and the pipe 110 can be prevented from being stopped up by the oligomer. Accordingly, it is possible to provide the motor 6 having the stator 5 which excels in compatibility with the refrigerant 20 and the refrigeration machine oil 18 and in which extraction of the oligomer is little. Further, by using the compressor 10 including the motor 6 for the refrigeration cycle apparatus 100, the refrigeration cycle apparatus 100 with high reliability can be provided.

**(Configuration of Rotor)**

Next, a configuration of the rotor 4 according to the first embodiment will be described. The rotor 4 includes the rotor core 40 and permanent magnets 45 attached to the rotor core 40. The rotor core 40 is formed of a plurality of electromagnetic steel sheets stacked in the axial direction. The plate thickness of each electromagnetic steel sheet is 0.1 mm to 0.7 mm, for example. In the first embodiment, the plate thickness of each electromagnetic steel sheet of the rotor 4 is 0.35 mm.

Here, a length of the rotor core 40 (i.e., a stack thickness of the rotor core 40) in the axial direction is represented by $L_r$, and a dimension (i.e., an internal diameter) of an internal space V of the hermetic container 30 in the width direction is represented by $D_c$ as shown in FIG. 2. A ratio $L_r/D_c$ of the length $L_r$ of the rotor core 40 in the axial direction to the dimension $D_c$ of the hermetic container 30 satisfies the following expression (1):

$$0.2 \leq L_r/D_c \leq 1.1 \qquad (1)$$

Since the ratio $L_r/D_c$ is lower than or equal to 1.1 that is the upper limit of the expression (1), a sufficiently large space volume is secured between an upper end of the rotor 4 and the terminal 36, and thus a volume flow rate of the refrigerant 20 discharged from the compressor 10 can be made high. Further, since the ratio $L_r/D_c$ is higher than or equal to 0.2 that is the lower limit of the expression (1), it is also possible to make the motor 6 generate torque necessary for driving the compression mechanism part 2.

The rotor core 40 has a shaft hole 44 in which the rotary shaft 7 is fixed. The rotary shaft 7 is fixed in the shaft hole 44 by means of shrink fitting, press fitting, adhesion or the like. A holder part 46 in a cylindrical shape is fixed to the outer circumference of the rotor core 40 in order to increase the rigidity of the rotor 4. The holder part 46 is fixed to the outer circumference of the rotor core 40 by means of an adhesive agent, press fitting, shrink fitting or cold fitting. The holder part 46 is formed of, for example, one of carbon fiber reinforced plastic (CFRP), stainless steel and resin.

As shown in FIG. 3, the rotor core 40 has magnet insertion holes 41 in which the permanent magnets 45 are inserted. In the first embodiment, the rotor core 40 has a plurality of (six in FIG. 3) magnet insertion holes 41. One magnet insertion hole 41 corresponds to one magnetic pole. Since the number of slots 53 in the stator 5 described above is nine, the combination of the number of poles and the number of slots in the motor 6 is six poles and nine slots. Incidentally, the number of magnet insertion holes 41 is not limited to six. It is sufficient that the number of magnet insertion holes 41 is two or more.

As shown in FIG. 3, each magnet insertion hole 41 is formed in a V-shape as viewed from above in the axial direction, for example. Further, at each end of the magnet insertion hole 41 in the circumferential direction, a flux barrier 42 as a leakage flux inhibition hole is formed. Since a portion between the flux barrier 42 and the outer circumference of the rotor core 40 is a thin-wall portion, leakage flux between adjoining magnetic poles is inhibited. Incidentally, the shape of the magnet insertion hole 41 is not limited to the V-shape.

In the first embodiment, two permanent magnets 45 are inserted in each magnet insertion hole 41, for example. End plates 47 and 48 shown in FIG. 2 are respectively fixed to both ends of the rotor 4 in the axial direction in order to prevent the permanent magnets 45 from falling out of the magnet insertion holes 41. Incidentally, it is sufficient that at least one permanent magnet 45 is inserted in each magnet insertion hole 41. Further, the end plate 47 or 48 may be provided with a balance weight (not shown) for improving rotation balance of the rotor 4.

The permanent magnet 45 is in a plate-like shape, for example. In the first embodiment, the permanent magnet 45 is in a flat plate-like shape. The permanent magnet 45 is in a rectangular shape in a plan view. The thickness of the permanent magnet 45 is greater than or equal to 2.5 times the gap between stator 5 and the rotor 4, for example. The thickness of the permanent magnet 45 is 2.0 mm, for example. A length of the permanent magnet 45 in the axial direction is slightly shorter than the length $L_r$ of the rotor core 40 in the axial direction, for example. With this configuration, a sufficiently strong magnetic force can be obtained while facilitating the mounting of the permanent magnets 45 in the magnet insertion holes 41. Consequently, the motor 6 is capable of generating the torque necessary for driving the compression mechanism part 2 while also inhibiting leakage current flowing into the hermetic container 30.

The two permanent magnets 45 inserted in each magnet insertion hole 41 have the same magnetic poles on the outer side. For example, the outer sides of the permanent magnets 45 are the north poles and the inner sides of the permanent magnets 45 are the south poles. Further, permanent magnets 45 inserted in a magnet insertion hole 41 has magnetic poles different from those of permanent magnets 45 inserted in an adjoining magnet insertion hole 41. For example, the outer sides of the permanent magnets 45 inserted in the adjoining magnet insertion hole 41 are the south poles and the inner sides of the permanent magnets 45 are the north poles.

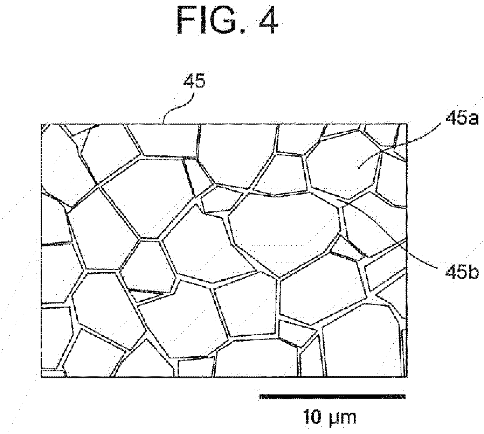

FIG. 4 is a schematic diagram showing a polycrystalline structure of the permanent magnet 45. As shown in FIG. 4, the permanent magnet 45 has a polycrystalline structure formed with a plurality of crystal grains. The plurality of crystal grains 45a are separated from each other by an intergranular phase 45b. Each of the plurality of crystal grains 45a is magnetized. The plurality of crystal grains 45a are magnetized in the same direction, by which the permanent magnet 45 generates magnetic flux in one direction. In the first embodiment, the magnetic flux is generated in a short-side direction of the permanent magnet 45. The crystal grains 45a and the intergranular phase 45b contain neodymium (Nd), iron (Fe) and boron (B). Namely, the permanent magnet 45 is formed of a neodymium rare-earth magnet.

In the first embodiment, the permanent magnet 45 does not contain dysprosium (Dy). Further, in the first embodiment, the permanent magnet 45 does not contain terbium (Tr). Namely, in the first embodiment, the content percentage of Dy (hereinafter referred to as a "Dy content percentage") in the permanent magnet 45 and the content percentage of Tr (hereinafter referred to as a "Tr content percentage") in the permanent magnet 45 are both 0 wt.%. Dy and Tr are rare-earth resources and thus are expensive. In the first embodiment, the cost of the permanent magnet 45 can be lowered since the Dy content percentage in the permanent magnet 45 and the Tr content percentage in the permanent magnet 45 are 0 wt.%. Incidentally, the permanent magnet 45 may contain less than 0.1 wt.% of Dy, less than 0.1 wt.% of Tr, or both of them.

In the first embodiment, an average diameter of the plurality of crystal grains 45a of the permanent magnet 45 (hereinafter referred to as an "average crystal grain diameter") is 1.6 μm to 12 μm.

Next, an example of a method for measuring the average crystal grain diameter of the crystal grains 45a of the permanent magnet 45 will be described below. First, a cross-sectional surface of the permanent magnet 45 is processed into a mirror surface by means of abrasion and thereafter the intergranular phase 45b is etched away by using an etching fluid. Then, the cross-sectional surface from which the intergranular phase 45b is etched away is observed by using an optical microscope at a magnification ratio in a range from several hundred times to 2000 times and an observation image is obtained. Thereafter, the cross-sectional area of each crystal grain 45a in the observation image is measured by means of image processing or the like. Then, an equivalent circle diameter, as the diameter of a circle having the same area as the measured cross-sectional area, is calculated as the grain diameter of the crystal grain 45a. The average crystal grain diameter of the crystal grains 45a of the permanent magnet 45 is the average value of the equivalent circle diameters of a plurality of crystal grains 45a. Incidentally, it is also possible to select a plurality of cross-sectional surfaces in the permanent magnet 45 during the observation using the optical microscope in consideration of variations in the size of the crystal grain 45a. Further, the average crystal grain diameter of the crystal grains 45a of the permanent magnet 45 may also be calculated based on an occupation area ratio of each of the plurality of crystal grains 45a in the observation image.

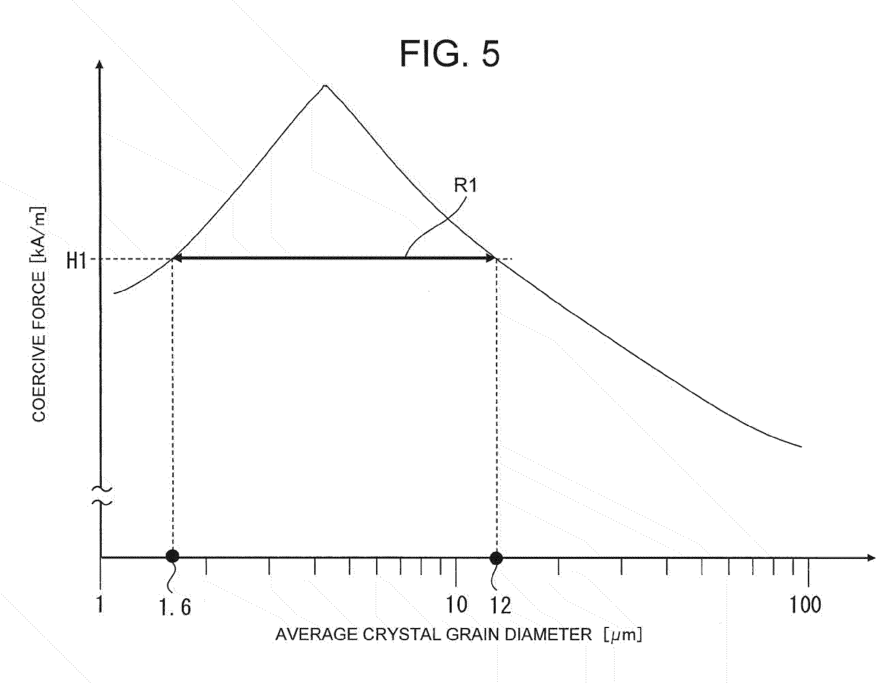

FIG. 5 is a graph showing a relationship between the average crystal grain diameter of the crystal grains 45a of the permanent magnet 45 and a coercive force of the permanent magnet 45. In FIG. 5, the horizontal axis represents the average crystal grain diameter [μm] of the crystal grains 45a of the permanent magnet 45 using a logarithmic scale, and the vertical axis represents the coercive force [kA/m] of the permanent magnet 45. In FIG. 5, the coercive force H1 is a coercive force (i.e., demagnetization resistance) that prevents the occurrence of the irreversible demagnetization of the permanent magnet 45 even when the motor 6 is located in the atmosphere of the refrigerant 20 lower than or equal to 100 °C. The coercive force H1 is determined experimentally, for example. In the first embodiment, the average crystal grain diameter of the crystal grains 45a of the permanent magnet 45 is set within a range R1 of 1.6 μm to 12 μm in order to set the coercive force of the permanent magnet 45 greater than or equal to the coercive force H1. In other words, in order that the permanent magnet 45 has a coercive force greater than or equal to the coercive force H1, a variation in the average crystal grain diameter of the crystal grains 45a of the permanent magnet 45 is allowed within the range R1.

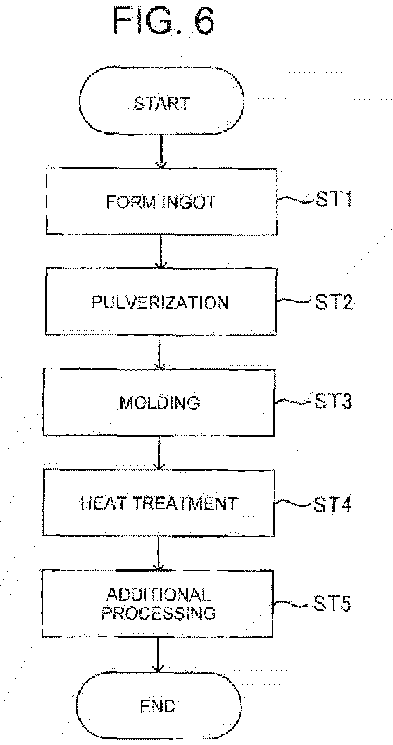

Next, a manufacturing method of the permanent magnet 45 will be described. FIG. 6 is a flowchart showing an example of a manufacturing process of the permanent magnet 45. First, in step ST1, an ingot is made by melting a magnet material containing Nd, Fe and B in a vacuum melting furnace and thereafter pouring the melted magnet material into a mold.

In step ST2, fine powder having an average grain diameter of 1.6 μm to 12 μm is made by pulverizing the ingot with a jet mill in an atmosphere of inert gas such as nitrogen gas or helium gas.

In step ST3, the fine powder is formed into a predetermined shape by performing magnetic field molding press in a mold to which magnetic field is applied. By this step, a compact that is magnetically oriented is made.

In step ST4, the compact is sintered by performing heat treatment on the compact in a vacuum sintering furnace. By this step, a sintered body is made.

In step ST5, the sintered body undergoes additional processing (for example, surface treatment, dimension adjustment, or the like), by which the manufacture of the permanent magnet 45 is finished.

In the step ST3, it is also possible to employ a pressless method in which the fine powder is magnetically orientated in a container, instead of performing the magnetic field molding press. In the pressless method, the fine powder rotates freely in the container during the magnetic orientation and the magnetic orientation level is enhanced, and thus the coercive force of the permanent magnet 45 can be increased further.

Next, a relationship between the coercive force and a residual flux density of the permanent magnet 45 will be described. In general, the coercive force of a permanent magnet decreases with an increase in the temperature. In general, the coercive force of the permanent magnet of the rotor decreases when the motor is located in the atmosphere of the refrigerant at a high temperature (for example, approximately 130 °C). For example, the coercive force of the permanent magnet decreases, with an increase in the temperature, at a rate of approximately 0.55 %/ΔK. In this case, the coercive force of the permanent magnet decreases by 60.5 % at the high temperature as compared to the coercive force of the permanent magnet at normal temperature (for example, 20 °C). There are cases where Dy or Tr as a heavy rare-earth element is added to the permanent magnet in order to inhibit the decrease in the coercive force, but the addition of Dy or Tr causes the residual flux density to decrease.

Further, in general, the residual flux density (i.e., magnetic force) of a permanent magnet decreases with an increase in the temperature. In general, the residual flux density of the permanent magnet of the rotor decreases when the motor is located in the atmosphere of the refrigerant at a high temperature (for example, approximately 130 °C). For example, the residual flux density of the permanent magnet decreases, with an increase in the temperature, at a rate of approximately 0.12 %/$\Delta$K. In this case, the residual flux density of the permanent magnet decreases by 13.2 % at the high temperature as compared to the residual flux density of the permanent magnet at normal temperature (for example, 20 °C). In order to inhibit the decrease in the residual flux density, it is necessary to increase the volume of the permanent magnet.

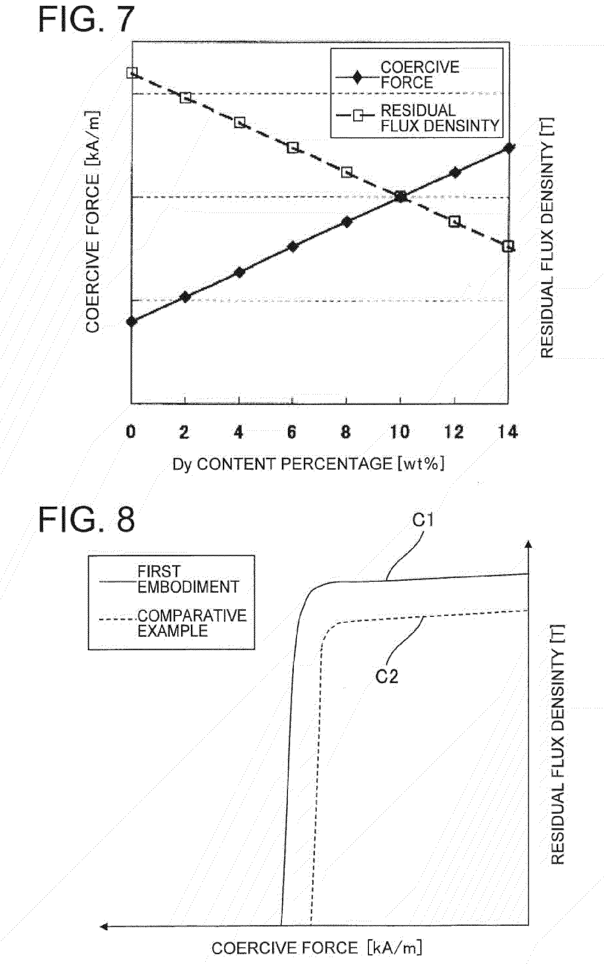

FIG. 7 is a graph showing a relationship between the Dy content percentage and the coercive force of the permanent magnet and a relationship between the Dy content percentage and the residual flux density. In FIG. 7, the horizontal axis represents the Dy content percentage [wt.%], the vertical axis on the right-hand side represents the residual flux density [T], and the vertical axis on the left-hand side represents the coercive force [kA/m] . In FIG. 7, the permanent magnet is a neodymium rare-earth magnet.

As shown in FIG. 7, the coercive force of the permanent magnet increases proportionally to the Dy content percentage. On the other hand, the residual flux density representing the magnitude of the magnetic force of the permanent magnet decreases proportionally to the Dy content percentage. Namely, it is desirable to increase the Dy content percentage in order to obtain a sufficiently great coercive force to prevent the occurrence of the irreversible demagnetization of the permanent magnet. On the other hand, it is desirable to decrease the Dy content percentage in order to obtain a sufficiently high residual flux density to increase the output and the efficiency of the motor. As above, it has been difficult to increase both of the coercive force and the residual flux density in the permanent magnet. Further, Dy is expensive and thus increases the cost of the permanent magnet.

In the first embodiment, the Dy content percentage in the permanent magnet 45 is 0 wt.% as described above. Thus, a sufficiently high residual flux density is obtained in the permanent magnet 45. As for the coercive force of the permanent magnet 45, even if the Dy content percentage in the permanent magnet 45 is 0 wt.%, the permanent magnet 45 has a coercive force greater than or equal to the coercive force H1 shown in FIG. 5 since the average crystal grain diameter of the crystal grains 45a of the permanent magnet 45 is 1.6 $\mu$m to 12 $\mu$m as described above. Namely, in the first embodiment, both of the coercive force and the residual flux density can be increased sufficiently in the permanent magnet 45.

Next, the coercive force and the residual flux density of the permanent magnet 45 of the rotor 4 according to the first embodiment will be described by comparison with those of a permanent magnet according to a comparative example. The average crystal grain diameter of the permanent magnet according to the comparative example is 20 $\mu$m to 30 $\mu$m, for example. FIG. 8 is a diagram showing a demagnetization curve C1 of the permanent magnet 45 according to the first embodiment and a demagnetization curve C2 of the permanent magnet according to the comparative example. The demagnetization curve C2 is a demagnetization curve of the permanent magnet when a motor having a rotor including the permanent magnets according to the comparative example is located in the atmosphere of the refrigerant at 130 °C. In FIG. 8, the horizontal axis represents the coercive force [kA/m] and the vertical axis represents the residual flux density [T] . In FIG. 8, the coercive force is greater as it goes leftward on the horizontal axis, and the residual flux density is higher as it goes upward on the vertical axis.

As can be understood from the demagnetization curves C1 and C2 shown in FIG. 8, the coercive force and the residual flux density of the permanent magnet 45 according to the first embodiment are respectively greater than the coercive force and the residual flux density of the permanent magnet according to the comparative example. Namely, in the first embodiment, the coercive force of the permanent magnet 45 can be made greater than the coercive force of the permanent magnet according to the comparative example since the average crystal grain diameter of the crystal grains 45a of the permanent magnet 45 is 1.6 $\mu$m to 12 $\mu$m. Further, in the first embodiment, the residual flux density of the permanent magnet 45 can be made higher than the residual flux density of the permanent magnet according to the comparative example since the Dy content percentage in the permanent magnet 45 is 0 wt.%.

Furthermore, in the first embodiment, by use of R290 as the refrigerant 20 in the compressor 10, an upper limit of the temperature of the atmosphere of the refrigerant 20 in which the motor 6 is placed is reduced to lower than or equal to 100 °C (specifically, 95 °C), and thus the coercive force and the residual flux density of the permanent magnet 45 according to the first embodiment can be made respectively greater than the coercive force and the residual flux density of the permanent magnet according to the comparative example.

(Configuration of Motor Drive Device)

Next, the motor drive device 60 as the drive circuit for driving the motor 6 according to the first embodiment will be described. FIG. 9 is a diagram showing the configuration of the motor drive device 60.

The motor drive device 60 includes a converter 70, an inverter 80, a power supply voltage detection unit 61, a DC voltage detection unit 62 and a control device 65. The converter 70 converts AC voltage supplied from a commercial AC power supply 11 as an external power supply to DC voltage. The converter 70 includes a rectifier 70a. The rectifier 70a is connected to the commercial AC power supply 11 via a reactor 63. By use of the small-sized reactor 63, the motor drive device 60 is installed in the motor 6 with ease.

The rectifier 70a includes a plurality of switching elements 71a and 71b, a first diode 72a and a second diode 72b. Each of the switching elements 71a and 71b is a MOSFET (Metal-Oxide-Semiconductor Field-Effect Transistor), for example. Incidentally, the switching elements 71a and 71b are not limited to MOSFETs, but may be other transistors such as IGBTs (Insulated Gate Bipolar Transistors) using silicon (Si), silicon carbide (SiC) or gallium nitride (GaN).

A series circuit of the first diode 72a and the second diode 72b is formed by connecting an anode side of the first diode 72a and a cathode side of the second diode 72b to each other. A connection point of the first diode 72a and the second diode 72b is an input end of the rectifier 70a. Further, both ends of the series circuit of the first diode 72a and the second diode 72b are output ends of the rectifier 70a.

The converter 70 may further include smoothing capacitors 73a and 73b for smoothing DC voltage outputted from the rectifier 70a.

A maximum value of DC voltage outputted from the converter 70 is greater than a peak value of the voltage of the commercial AC power supply 11. When $V_{dcmax}$ represents an average value of the maximum value of the DC voltage outputted from the converter 70 and $V_a$ represents the peak value of the voltage of the commercial AC power supply 11, a ratio $V_{dcmax}/V_a$ of $V_{dcmax}$ to Va satisfies the following expression (2):

$$1.2 \leq V_{dcmax}/V_a \leq 2.0 \qquad (2)$$

Since the ratio $V_{dcmax}/V_a$ is higher than or equal to 1.2 that is the lower limit of the expression (2), supply voltage to the motor 6 necessary for driving the compression mechanism part 2 (see FIG. 2) can be generated. Further, since the ratio $V_{dcmax}/V_a$ is lower than or equal to 2.0 that is the upper limit of the expression (2), leakage current flowing from the motor 6 to the hermetic container 30 can be inhibited.

Further, the number of turns of the coil 55 of the stator 5 of the motor 6 is set so as to correspond to the voltage value of the voltage outputted from the converter 70. The number of turns of the coil 55 is set so that a peak value of no-load inductive voltage is greater than an average value of the DC voltage outputted from the converter 70 at the same rotation speed. When $V_b$ represents the peak value of the no-load inductive voltage and $V_{dc}$ represents the average value of the DC voltage outputted from the converter 70, a ratio $V_b/V_{dc}$ of $V_b$ to $V_{dc}$ satisfies the following expression (3):

$$1.1 \leq V_b/V_{dc} \leq 2.5 \qquad (3)$$

Since the ratio $V_b/V_{dc}$ is higher than or equal to 1.1 that is the lower limit of the expression (3), the motor 6 can be driven with high efficiency from low-speed operation to highspeed operation by coordinating the switching operations in the rectifier 70a of the converter 70. Further, since the ratio $V_b/V_{dc}$ is lower than or equal to 2.5 that is the upper limit of the expression (3), the leakage current flowing from the motor 6 to the hermetic container 30 can be inhibited.

The inverter 80 is connected to the converter 70. The inverter 80 converts the DC voltage supplied from the converter 70 to desired high-frequency voltage and outputs the high-frequency voltage to the motor 6. The inverter 80 includes a plurality of (six in FIG. 7) inverter switches 81a to 81f and a plurality of (six in FIG. 7) flywheel diodes 82a to 82f.

The inverter switches 81a to 81f are insulated gate bipolar transistors using Si, Sic or GaN, for example. Incidentally, the inverter switches 81a to 81f are not limited to insulated gate bipolar transistors but may be other transistors such as MOSFETs. In the case where MOSFETs are used as the inverter switches 81a to 81f, the inverter switches 81a to 81f can be MOSFETs having the super junction structure. The on-off timing of the inverter switches 81a to 81f is determined based on a carrier wave. The carrier wave is formed of triangular waves having constant amplitude. The frequency of the carrier wave is 4 kHz to 100 kHz, for example. With this setting, the motor drive device 60 is capable of rotating the motor 6 at a high speed higher than or equal to 140 rps while inhibiting the leakage current. Further, since the switching frequency of the inverter 80 is higher than or equal to 4 kHz and lower than or equal to 100 kHz, the motor 6 can be multipolarized to eight poles or more and downsized.

For the flywheel diodes 82a to 82f, SiC is used, for example. The flywheel diodes 82a to 82f inhibit back electromotive force that occurs when the inverter switches 81a to 81f turn the current from on to off.

The power supply voltage detection unit 61 detects the power supply voltage of the commercial AC power supply 11 as detection information and outputs the detection information to the control device 65. The power supply voltage detection unit 61 is an operational amplifier, for example. The DC voltage detection unit 62 detects voltage between both ends of the plurality of smoothing capacitors 73a and 73b as detection information and outputs the detection information to the control device 65. The DC voltage detection unit 62 is an operational amplifier, for example. The control device 65 makes the switching elements 71a and 71b of the rectifier 70a perform on-off operation based on the detection information outputted from the power supply voltage detection unit 61 and the DC voltage detection unit 62.

The control device 65 improves the power factor of the motor 6 by inhibiting harmonic components included in the commercial AC power supply 11 by making the switching elements 71a and 71b perform the on-off operation (i.e., synchronous rectification operation) in predetermined sections or all sections in the commercial AC power supply 11 depending on operating conditions. Further, the control device 65 is capable of driving the motor 6 with high efficiency and at high power by increasing the value of the DC voltage supplied to the inverter 80 to higher than or equal to the peak value of the voltage of the commercial AC power supply 11. Incidentally, predetermined switching operation performed by the switching elements 71a and 71b is higher than or equal to 20 kHz and lower than or equal to 100 kHz. Accordingly, the value of the DC voltage supplied to the inverter 80 can be increased.

The motor 6 is connected to the inverter 80 via the terminal 36 shown in FIG. 2. The motor 6 is capable of varying the rotation speed and the torque and performing wide-range operation from low speed to high speed by executing variable speed driving based on PWM (Pulse Width Modulation) control performed by the inverter switches 81a to 81f included in the inverter 80.

**(Air Conditioner)**

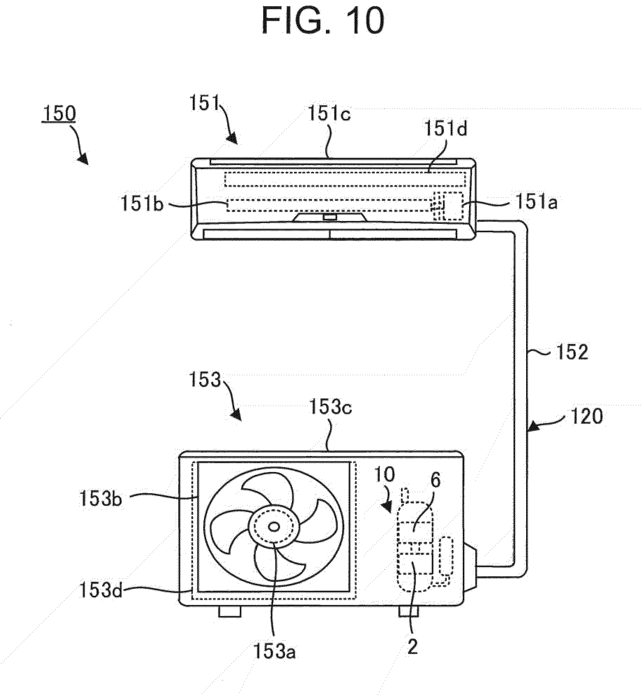

Next, an air conditioner 150 according to the first embodiment will be described. FIG. 10 is a diagram schematically showing a configuration of the air conditioner 150 according to the first embodiment. As shown in FIG. 10, the air conditioner 150 includes an indoor unit 151, a refrigerant pipe 152 and an outdoor unit 153. The indoor unit 151 and the outdoor unit 153 are connected together by the refrigerant pipe 152 and thereby form the refrigerant circuit 120. The air conditioner 150 is capable of executing an operation such as a cooling operation in which the indoor unit 151 blows cool air or a heating operation in which the indoor unit 151 blows warm air, for example.

The indoor unit 151 includes a motor 151a, an indoor blower 151b and a housing 151c. The motor 151a is a drive source for driving the indoor blower 151b. The indoor blower 151b is driven by the motor 151a and thereby blows air. The housing 151c covers the motor 151a and the indoor blower 151b.

The indoor unit 151 further includes an indoor-side heat exchanger 151d. The indoor-side heat exchanger 151d performs heat exchange between the refrigerant 20 (see FIG. 1) and air.

The outdoor unit 153 includes a motor 153a, an outdoor blower 153b, the compressor 10 and a housing 153c. The motor 153a is a drive source for driving the outdoor blower 153b. The outdoor blower 153b is driven by the motor 153a and thereby blows air. The housing 153c covers the motor 153a, the outdoor blower 153b, the compressor 10 and a heat exchanger.

The outdoor unit 153 further includes an outdoor-side heat exchanger 153d and a four-way valve (not shown). The outdoor-side heat exchanger 153d performs heat exchange between the refrigerant 20 (see FIG. 1) and outside air. The four-way valve is a valve that switches a flow direction of the refrigerant 20.

The four-way valve of the outdoor unit 153 feeds the high-temperature and high-pressure refrigerant gas sent out from the compressor 10 to the outdoor-side heat exchanger 153d in the cooling operation or to the indoor-side heat exchanger 151d in the heating operation. Namely, in the cooling operation, the outdoor-side heat exchanger 153d functions as the condenser 101 shown in FIG. 1 and the indoor-side heat exchanger 151d functions as the evaporator 103 shown in FIG. 1. In contrast, in the heating operation, the indoor-side heat exchanger 151d functions as the condenser 101 and the outdoor-side heat exchanger 153d functions as the evaporator 103. As above, by the addition of the four-way valve to the refrigeration cycle apparatus 100 shown in FIG. 1, the air conditioner 150 can be provided with the refrigeration cycle apparatus 100.

Incidentally, the refrigeration cycle apparatus 100 according to the first embodiment may be provided in not only the air conditioner 150 but also other household electric appliances such as a refrigerator or a freezer.

**(Effect of First Embodiment)**

As described above, according to the first embodiment, since the average crystal grain diameter of the crystal grains 45a of the permanent magnet 45 is 1.6 $\mu$m to 12 $\mu$m, the permanent magnet 45 has a coercive force greater than or equal to the coercive force H1 shown in FIG. 5. Thus, the occurrence of the irreversible demagnetization of the permanent magnet 45 can be prevented. Accordingly, the output power and the efficiency of the motor 6 having the rotor 4 including the permanent magnets 45 can be increased.

Further, according to the first embodiment, the Dy content percentage in the permanent magnet 45 and the Tr content percentage in the permanent magnet 45 are both 0 wt.%. Accordingly, the residual flux density of the permanent magnet 45 can be made high. Furthermore, the cost of the permanent magnet 45 can be reduced since the permanent magnet 45 contains neither of Dy and Tr which are expensive elements.

Moreover, according to the first embodiment, R290, with which the upper limit temperature of the discharge temperature is 95 °C, is used as the refrigerant 20 in the compressor 10. Thus, the occurrence of the irreversible demagnetization of the permanent magnet 45 can be prevented.

In order to inhibit the decrease in the residual flux density of the permanent magnet due to the temperature rise, it can be considered to compensate for the decrease in the output power and the efficiency of the motor by increasing the volume of the permanent magnet through increasing the stack thickness of the rotor or by increasing one of the supply voltage to the motor, the rotation speed of the motor, the number of turns of the coil, the carrier frequency of the inverter and the switching frequency of the converter. However, when R32 is used as the refrigerant flowing in the hermetic container, there is a problem that the leakage current flowing from the motor to the hermetic container of the compressor increases. As a result, there are upper limits on the stack thickness of the rotor, the supply voltage to the motor, and the like. Thus, the increase in the output power and the efficiency of the motor are limited. According to the first embodiment, the motor 6 is located in the atmosphere of R290 whose relative dielectric constant is small, and thus the leakage current flowing from the motor 6 to the hermetic container 30 can be inhibited. Therefore, the stack thickness of the rotor 4, the supply voltage to the motor 6, the rotation speed of the motor 6, the number of turns of the coil 55, the carrier frequency of the inverter 80 and the switching frequency of the converter 70 can be increased as compared to conventional motors. Consequently, the output power and the efficiency of the motor 6 can be increased while inhibiting the leakage current.

**(Modification of First Embodiment)**

In the first embodiment, R290 has been taken as an example of the refrigerant 20 with which the maximum value of the discharge temperature is lower than or equal to 100 °C and the description has been given of the rotor 4 of the motor 6 located in the atmosphere of R290. However, there also exist refrigerants 20 used at a temperature lower than or equal to 100 °C besides R290. Further, there also exist refrigerants 20 used at a temperature slightly higher than 100 °C. Thus, in the modification of the first embodiment, a description will be given of a rotor of a motor that is located in the atmosphere of a different refrigerant at a temperature of approximately 100 °C. In the modification of the first embodiment, a description will be given of a rotor including a permanent magnet to which the irreversible demagnetization does not occur even when the motor 6 is located in the atmosphere of a different refrigerant at a temperature of approximately 100 °C, a motor including the rotor, and a compressor including the motor. The compressor according to the modification of the first embodiment differs from the above-described compressor 10 in the type of the refrigerant.

In the compressor 10 according to the modification of the first embodiment, the refrigerant 20 contains one or more of R1123 (i.e., 1,1,2-trifluoroethylene), R1234yf (i.e., fluoroolefin), R1132E (i.e., trans-1,2-difluoroethylene), R454A and R454C. In the compressor 10, the maximum values of the discharge temperature of these refrigerants are 97 °C to 103 °C. Specifically, in the compressor 10, R1123 is used at a temperature equal to lower than 98 °C as the operation upper limit temperature, and R1234yf is used at a temperature equal to or lower than 99 °C as the operation upper limit temperature. R1132E is used at a temperature equal to or lower than 98 °C as the operation upper limit temperature, and R454A is used at a temperature equal to or lower than 103 °C as the operation upper limit temperature. R454C is used at a temperature equal to or lower than 97 °C as the operation upper limit temperature.

Further, even when the aforementioned refrigerant is mixed with a different refrigerant, the refrigerant 20 is used at a temperature of approximately 100 °C as the operation upper limit temperature. In the modification of the first embodiment, the refrigerant 20 can be a refrigerant as a mixture of two or more types of ethylenic fluorohydrocarbons. For example, a mixed refrigerant as a mixture of R1132 and R32 may be used as the refrigerant 20. The proportion of R1132 in this mixed refrigerant is desired to be set at 40 wt.% to 60wt.%, for example. Further, R1132 may be mixed with a different refrigerant. For example, the refrigerant mixed with R1132 can be R1141 (i.e., fluoroethylene), R1132a (i.e., 1,1-difluoroethylene), R1132(E) or R1132(Z) (i.e., cis-1,2-difluoroethylene), for example.

Further, in the modification of the first embodiment, R1123 may be mixed with R1234ze(E) (i.e., trans-1,3,3,3-tetrafluoropropene), R1234ze (Z) (i.e., cis-1,3, 3, 3-tetrafluoropropene), R134a (i.e., 1,1,1,2-tetrafluoroethane) or R125 (i.e., 1,1,1,2,2-pentafluoroethane). Furthermore, R1123 may be mixed with two or more refrigerants selected from R32, R1234yf, R1234ze(E), R1234ze(Z), R134a and R125. Incidentally, the aforementioned R454A and R454C are mixed refrigerants of R1234yf and R32.

Even when the refrigerant 20 contains one or more of R1123, R1234yf, R1132(E), R454A and R454C, the occurrence of the irreversible demagnetization of the permanent magnet 45 can be prevented since the permanent magnet 45 has a coercive force greater than or equal to the coercive force H1 since the average crystal grain diameter of the crystal grains 45a of the permanent magnet 45 is 1.6 $\mu$m to 12 $\mu$m.

**(Second Embodiment)**

In the first embodiment, the description has been given of the rotor 4 of the motor 6 located in the atmosphere of the refrigerant at 100 °C or lower. In a second embodiment, a description will be given of a rotor of a motor that is located in the atmosphere of the refrigerant at 120 °C or lower. Specifically, in the second embodiment, a description will be given of a rotor including a permanent magnet in which the irreversible demagnetization does not occur even when the motor 6 is located in the atmosphere of the refrigerant at a temperature higher than 110 °C and lower than or equal to 120 °C, a motor including the rotor, and a compressor including the motor. The rotor and the motor according to the second embodiment differ from the rotor 4 and the motor 6 according to the first embodiment in a condition required of the average crystal grain diameter of the crystal grains of the permanent magnet. Further, the compressor according to the second embodiment differs from the compressor 10 according to the first embodiment in the condition required of the average crystal grain diameter of the crystal grains of the permanent magnet and the type of the refrigerant. Except for these features, the second embodiment is the same as the first embodiment. Thus, FIG. 1 to FIG. 4 are referred to in the following description.

As shown in FIG. 2, the compressor 10 according to the second embodiment includes the hermetic container 30, the refrigerant 20 flowing in the hermetic container 30, the compression mechanism part 2 that compresses the refrigerant 20, and the motor 6 that drives the compression mechanism part 2. In the compressor 10 according to the second embodiment, the refrigerant 20 contains one or more of R454B, R463A and R466A. In the compressor 10, the maximum values of the discharge temperature of these refrigerants are 114 °C to 118 °C. Specifically, in the compressor 10, R454B is used at a temperature lower than or equal to 116 °C as the operation upper limit temperature, and R463A is used at a temperature lower than or equal to 114 °C as the operation upper limit temperature. R466A is used at a temperature lower than or equal to 118 °C as the operation upper limit temperature.

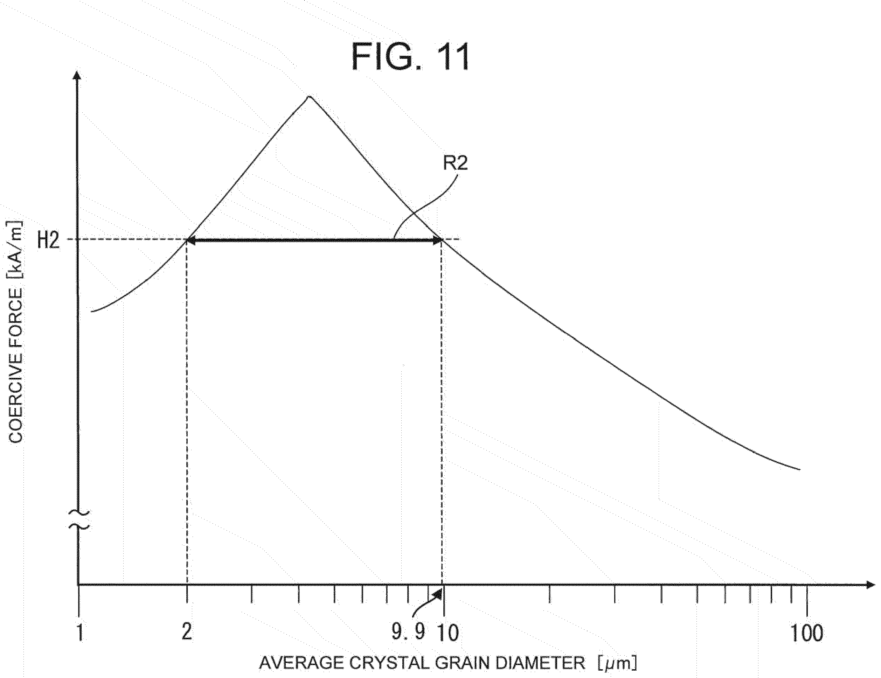

FIG. 11 is a graph showing a relationship between the average crystal grain diameter of the crystal grains 45a and the coercive force of the permanent magnet 45 of the rotor 4 according to the second embodiment. In FIG. 11, the horizontal axis represents the average crystal grain diameter [$\mu$m] using a logarithmic scale, and the vertical axis represents the coercive force [kA/m] . The permanent magnet 45 is a neodymium rare-earth magnet. In FIG. 11, the coercive force H2 is a coercive force (i.e., demagnetization resistance) that prevents the occurrence of the irreversible demagnetization of the permanent magnet 45 even when the motor 6 is located in the atmosphere of the refrigerant 20 at 114 °C to 118 °C. The coercive force H2 is determined experimentally, for example.

In the second embodiment, the average crystal grain diameter of the crystal grains 45a of the permanent magnet 45 is set within a range R2 of 2.0 $\mu$m to 9.9 $\mu$m in order to set the coercive force of the permanent magnet 45 greater than or equal to the coercive force H2. In other words, in order that the permanent magnet 45 has a coercive force greater than or equal to the coercive force H2, the variation in the average crystal grain diameter of the crystal grains 45a of the permanent magnet 45 is allowed within the range R2.

According to the second embodiment, since the average crystal grain diameter of the crystal grains 45a of the permanent magnet 45 is 2.0 $\mu$m to 9.9 $\mu$m, the permanent magnet 45 has a coercive force greater than or equal to the coercive force H2. Thus, the occurrence of the irreversible demagnetization of the permanent magnet 45 can be prevented even when the motor 6 is located in the atmosphere of the refrigerant 20 at 114 °C to 118 °C. Accordingly, the output power and the efficiency of the motor 6 including the rotor 4 according to the second embodiment can be increased.

## DESCRIPTION OF REFERENCE CHARACTERS

4: rotor, 5: stator, 6: motor, 10: compressor, 18: refrigeration machine oil (lubricating oil), 20: refrigerant, 30: hermetic container (container), 40: rotor core, 41: magnet insertion hole, 45: permanent magnet, 45a: crystal grain, 100: refrigeration cycle apparatus, 101: condenser, 102: expansion valve (decompressor), 103: evaporator, 150: air conditioner, $L_r$: length of rotor core in axial direction, $D_c$: width dimension of internal space of container.

## Claims

1.  A rotor in a motor to drive a compression mechanism part that compresses a refrigerant,

    wherein the rotor has a permanent magnet comprising a plurality of crystal grains, and
    wherein an average crystal grain diameter of the plurality of crystal grains is 1.6 $\mu$m to 12 $\mu$m.

2.  The rotor according to claim 1, wherein the rotor is located in an atmosphere of the refrigerant, and wherein the refrigerant contains one or more of R290, R1123, R1234yf, R1132(E), R454A and R454C.

3.  A rotor in a motor to drive a compression mechanism part that compresses a refrigerant,

    wherein the rotor has a permanent magnet comprising a plurality of crystal grains, and
    wherein an average crystal grain diameter of the plurality of crystal grains is 2.0 $\mu$m to 9.9 $\mu$m.

4.  The rotor according to claim 3, wherein the rotor is located in an atmosphere of the refrigerant, and wherein the refrigerant contains one or more of R454B, R466A and R463A.

5.  The rotor according to any one of claims 1 to 4, further comprising a rotor core to which the permanent magnet is attached.

6.  The rotor according to claim 5, wherein the rotor core has a magnet insertion hole, and wherein the permanent magnet is inserted in the magnet insertion hole.

7.  The rotor according to any one of claims 1 to 6, wherein a content percentage of dysprosium in the permanent magnet and a content percentage of terbium in the permanent magnet are both 0 wt.%.

**8.** The rotor according to any one of claims 1 to 7, wherein the permanent magnet is a neodymium rare-earth magnet.

**9.** A motor comprising:

the rotor according to any one of claims 1 to 8; and
a stator.

**10.** A compressor comprising:

the motor according to claim 9;
the compression mechanism part that is driven by the motor; and
a container that accommodates the motor and the compression mechanism part.

**11.** The compressor according to claim 10, further comprising:

the refrigerant flowing in the container; and
a lubricating oil stored in the container,
wherein a relative dielectric constant of the refrigerant is smaller than a relative dielectric constant of the lubricating oil.

**12.** The compressor according to claim 11, wherein the relative dielectric constant of the refrigerant is 1.6 to 1.9.

**13.** The compressor according to claim 11 or 12, wherein the lubricating oil is polyalkylene glycol oil.

**14.** The compressor according to any one of claims 10 to 13, wherein $0.2 \leq L_r/D_c \leq 1.1$ is satisfied, where $L_r$ represents a length of a rotor core of the rotor in an axial direction and $D_c$ represents a dimension of an internal space of the container in a width direction orthogonal to the axial direction.

**15.** The compressor according to any one of claims 10 to 14, wherein the motor is located in an atmosphere of the refrigerant in the container.

**16.** The compressor according to any one of claims 10 to 15, wherein the motor is arranged on a downstream side of the compression mechanism part in a flow direction of the refrigerant.

**17.** A refrigeration cycle apparatus comprising:

the compressor according to any one of claims 10 to 16;
a condenser to condense the refrigerant sent out from the compressor;
a decompressor to decompress the refrigerant condensed by the condenser; and

an evaporator to evaporate the refrigerant decompressed by the decompressor.

**18.** An air conditioner comprising the refrigeration cycle apparatus according to claim 17.

EP 4 102 685 A1

# FIG. 1

# FIG. 2

# FIG. 3

# FIG. 4

45

45a

45b

10 µm

# FIG. 5

EP 4 102 685 A1

# FIG. 6

```
        ┌─────────────────┐
        │      START      │
        └─────────────────┘
                 │
                 ▼
   ┌─────────────────────────┐
   │      FORM INGOT         │────  ST1
   └─────────────────────────┘
                 │
                 ▼
   ┌─────────────────────────┐
   │     PULVERIZATION       │────  ST2
   └─────────────────────────┘
                 │
                 ▼
   ┌─────────────────────────┐
   │       MOLDING           │────  ST3
   └─────────────────────────┘
                 │
                 ▼
   ┌─────────────────────────┐
   │    HEAT TREATMENT       │────  ST4
   └─────────────────────────┘
                 │
                 ▼
   ┌─────────────────────────┐
   │      ADDITIONAL         │────  ST5
   │      PROCESSING         │
   └─────────────────────────┘
                 │
                 ▼
        ┌─────────────────┐
        │       END       │
        └─────────────────┘
```

## FIG. 7

## FIG. 8

FIG. 9

# FIG. 10

FIG. 11

## INTERNATIONAL SEARCH REPORT

| International application No. |
| --- |
| PCT/JP2020/004741 |

### A. CLASSIFICATION OF SUBJECT MATTER

Int.Cl. H02K1/27(2006.01)i
FI: H02K1/27501M

According to International Patent Classification (IPC) or to both national classification and IPC

### B. FIELDS SEARCHED

Minimum documentation searched (classification system followed by classification symbols)
Int.Cl. H02K1/27

Documentation searched other than minimum documentation to the extent that such documents are included in the fields searched
Published examined utility model applications of Japan      1922-1996
Published unexamined utility model applications of Japan      1971-2020
Registered utility model specifications of Japan      1996-2020
Published registered utility model applications of Japan      1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2019/102574 A1 (MITSUBISHI ELECTRIC CORPORATION) 31.05.2019 (2019-05-31), paragraphs [0012]-[0030], [0051]-[0053], [0072], fig. 1-3 | 1-18 |
| Y | JP 2015-49147 A (MITSUBISHI ELECTRIC CORPORATION) 16.03.2015 (2015-03-16), paragraph [0019] | 1-18 |
| Y | JP 6614389 B1 (DAIKIN INDUSTRIES, LTD.) 04.12.2019 (2019-12-04), paragraphs [0019]-[0021] | 2, 4-18 |
| Y | JP 6545337 B1 (HITACHI-JOHNSON CONTROLS AIR CONDITIONING INC.) 17.07.2019 (2019-07-17), paragraph [0011] | 4-18 |
| Y | WO 2019/239517 A1 (MITSUBISHI ELECTRIC CORPORATION) 19.12.2019 (2019-12-19), paragraph [0015] | 4-18 |

☒ Further documents are listed in the continuation of Box C.      ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16.03.2020 | 24.03.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2020/004741 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2019-140894 A (DENSO CORPORATION) 22.08.2019 (2019-08-22), paragraphs [0051]-[0054], [0098], fig. 1, 2 | 7-18 |
| Y | JP 2017-115889 A (PANASONIC INTELLECTUAL PROPERTY MANAGEMENT CO., LTD.) 29.06.2017 (2017-06-29), paragraphs [0056], [0061]-[0063], fig. 1 | 11-18 |
| Y | CN 207134963 U (GUANGDONG MEIZHI COMPRESSOR CO., LTD.) 23.03.2018 (2018-03-23), claims 2, 7, 12, fig. 1-5 | 14-18 |

Form PCT/ISA/210 (second sheet) (January 2015)

**INTERNATIONAL SEARCH REPORT**
Information on patent family members

International application No.

PCT/JP2020/004741

```
WO 2019/102574 A1  31.05.2019    (Family: none)

JP 2015-49147 A     16.03.2015    (Family: none)

JP 6614389 B1       04.12.2019    (Family: none)

JP 6545337 B1       17.07.2019    (Family: none)

WO 2019/239517 A1  19.12.2019    (Family: none)

JP 2019-140894 A    22.08.2019    (Family: none)

JP 2017-115889 A    29.06.2017    US 2016/0017874 A1
                                  paragraphs [0069], [0074]-[0077], fig. 1
                                  WO 2013/125197 A1
                                  EP 2818716 A1
                                  CN 104066988 A

CN 207134963 U      23.03.2018    (Family: none)
```

Form PCT/ISA/210 (patent family annex) (January 2015)

**EP 4 102 685 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5661903 B